# EUROPÄISCHE PATENTSCHRIFT

(11) **EP 2 336 581 B1**
(45) Veröffentlichungstag und Bekanntmachung des Hinweises auf die Patenterteilung: **13.01.2016**
(21) Anmeldenummer: 10192389.4
(22) Anmeldetag: 24.11.2010
(51) Int. Cl.: F16C 11/06

(54) **Kugelzapfen**
Ball joint
Pivot à rotule

(30) Priorität: 18.12.2009 DE 202009014886 U
(43) Veröffentlichungstag der Anmeldung: 22.06.2011
(73) Patentinhaber: KAMAX Holding GmbH & Co. KG, 35315 Homberg (Ohm) (DE)
(72) Erfinder: Lutz, Karl-Eduard, 36325, Feldatal (DE); Rühl, Reiner, 35327, Ulrichstein (DE)
(74) Vertreter: REHBERG HÜPPE + PARTNER

(56) Entgegenhaltungen:
- EP-A2- 1 418 349
- DE-A1- 4 403 584
- DE-A1-102006 030 725
- US-A- 3 255 623

## Beschreibung

### TECHNISCHES GEBIET DER ERFINDUNG

Die Erfindung betrifft einen Kugelzapfen nach dem Oberbegriff des Patentanspruchs 1. Die Erfindung betrifft weiterhin einen Zapfenstumpf nach dem Oberbegriff des Patentanspruchs 7 sowie Verfahren zur Herstellung des Kugelzapfens und des Zapfenstumpfs.

Ein derartiger Kugelzapfen dient in Kombination mit einer Lagerschale in bekannter Weise zur Ausbildung eines Kugelgelenks.

### STAND DER TECHNIK

Aus der deutschen Patentanmeldung DE 44 33 762 A1 ist ein Kugelzapfen bekannt, der in Kombination mit einer Lagerschale zur Ausbildung eines Kugelgelenks dient. Der Kugelzapfen weist einen Zapfenstumpf mit einem ersten freien Ende, einem Gewindeabschnitt, einer Befestigungsnut für die Befestigung eines Balgs oder dergleichen an dem Zapfenstumpf, einem konischen Abschnitt und einem zweiten Ende auf. Der Gewindeabschnitt ist im Bereich des ersten freien Endes angeordnet. Die Befestigungsnut ist in axialer Richtung zwischen dem Gewindeabschnitt und dem konischen Abschnitt angeordnet und an ihrem dem konischen Abschnitt zugewandten axialen Ende durch eine Wulst begrenzt. Der konische Abschnitt ist in axialer Richtung zwischen der Wulst und dem zweiten Ende angeordnet. Im Bereich des zweiten Endes des Kugelzapfens ist eine Kugel angeordnet, wobei diese einstückig mit dem Zapfenstumpf ausgebildet ist.

Weitere ähnliche einstückige Kugelzapfen mit einem konischen Abschnitt sind aus dem deutschen Patent DE 10 2007 023 245 B4 und der deutschen Patentanmeldung DE 10 2006 030 725 A1 bekannt.

### AUFGABE DER ERFINDUNG

Der Erfindung liegt die Aufgabe zugrunde, einen Kugelzapfen bereitzustellen, der mit vergleichsweise einfachen Werkzeugen in kostengünstiger Weise herstellbar ist.

### LÖSUNG

Die Aufgabe der Erfindung wird erfindungsgemäß mit den Merkmalen der unabhängigen Patentansprüche gelöst.

### WEITERER STAND DER TECHNIK

Aus der europäischen Patentanmeldung EP 0 667 464 A2 ist ebenfalls ein Kugelzapfen bekannt, der in Kombination mit einer Lagerschale zur Ausbildung eines Kugelgelenks dient. Der Kugelzapfen weist einen Zapfenstumpf mit einem ersten freien Ende, einem Gewindeabschnitt, einer Befestigungsnut für die Befestigung eines Balgs oder dergleichen an den Zapfenstumpf und einem zweiten Ende auf. Der Gewindeabschnitt ist im Bereich des freien Endes angeordnet. Die Befestigungsnut ist in axialer Richtung zwischen dem Gewindeabschnitt und einem zylindrischen Abschnitt angeordnet und an ihrem dem zylindrischen Abschnitt zugewandten axialen Ende durch eine Wulst begrenzt. Der zylindrische Abschnitt ist in axialer Richtung zwischen der Wulst und dem zweiten Ende angeordnet und erstreckt sich bis zum zweiten Ende. Der Kugelzapfen weist also keinen konischen Abschnitt auf. An dem zweiten Ende des Zapfenstumpfs ist eine Kugel befestigt, die nachträglich fest mit dem Zapfenstumpf verbunden wurde. Dies bedeutet, dass der Kugelzapfen in Bezug auf den Zapfenstumpf und die Kugel zunächst zweiteilig ausgebildet ist und somit nach Art eines Baukastensystems einheitlich ausgebildete Kugeln und unterschiedliche Zapfenstumpfe miteinander kombiniert werden können. Der Zapfenstumpf wurde laut Beschreibung durch Kaltumformung, insbesondere Kaltfließpressen, hergestellt. Aus diesem Stand der Technik ist auch ein Zapfenstumpf ohne Kugel bekannt.

Aus der deutschen Patentanmeldung DE 10 2005 014 905 A1 and dem zugehörigen deutschen Gebrauchsmuster DE 20 2004 005 272 U1 ist jeweils ein Kugelzapfen bekannt, der in Kombination mit einer Lagerschale zur Ausbildung eines Kugelgelenks dient. Der Kugelzapfen weist einen Zapfenstumpf mit einer Befestigungsnut für die Befestigung eines Balgs oder dergleichen an dem Zapfenstumpf, einem ersten zylindrischen Abschnitt, einem zweiten zylindrischen Abschnitt und einem Ende auf. An dem Ende ist eine Kugel angeordnet, die einstückig mit dem Zapfenstumpf ausgebildet ist. Die Befestigungsnut ist in axialer Richtung zwischen dem ersten und dem zweiten zylindrischen Abschnitt angeordnet und an ihrem von der Kugel abgewandten axialen Ende durch eine Wulst begrenzt. Die Wulst weist zwei Fasen auf und wurde durch Kaltumformung, insbesondere Stauchen bzw. Fließpressen, in einem geteilten Werkzeug hergestellt.

Weitere Kugelzapfen sind aus den PCT-Anmeldungen WO 2005/021184 A1**,** WO 2005/051594 A2 und WO 2005/106263 A1**,** der europäischen Patentanmeldung EP 0 898 090 A2**,** dem europäischen Patent EP 1 446 587 B1**,** den deutschen Patentanmeldungen DE 195 42 071 A1 und DE 10 2006 017 373 A1 sowie den deutschen Gebrauchsmustern DE 20 2008 006 650 U1**,** DE 202 18 262 U1 und DE 20 2006 001 771 U1 bekannt.

Aus dem US-Patent US 3,255,623 sind ein Kugelzapfen und ein Verfahren zu dessen Herstellung bekannt. Der Kugelzapfen ist einstückig ausgebildet und wird durch Kaltumformung hergestellt.

### BESCHREIBUNG DER ERFINDUNG

Die Erfindung betrifft einen Kugelzapfen mit den Merkmalen des Patentanspruchs 1. Die Erfindung betrifft weiterhin einen Zapfenstumpf mit den Merkmalen des Patentanspruchs 1 sowie Verfahren zur Herstellung des Kugelzapfens mit den Merkmalen des Patentanspruchs 14 und zur Herstellung des Zapfenstumpfs mit den Merkmalen des Patentanspruchs 15.

Die axiale Umformung ist in dieser Anmeldung so zu verstehen, dass die die Umformung bewirkende Bewegung des Umformwerkzeugs im Wesentlichen axial verläuft. Die Umformung grenzt sich so (neben bekannten spanabhebenden Verfahren) im Wesentlichen von radial ablaufenden Umformverfahren ab, bei denen in Umfangsrichtung geteilte Werkzeuge in radialer Richtung aufeinander zu bewegt werden. Die axiale Umformung bedeutet jedoch nicht, dass das Material des Zapfenstumpfs während der Umformung nur in axialer Richtung verformt wird.

Ausgangspunkt der Erfindung ist ein Kugelzapfen mit einem im wesentlichen konischen Abschnitt, der dazu dient, durch seine Abmessungen und seinen Kegelwinkel die gewünschte Winkelbeweglichkeit des Kugelzapfens in der korrespondierenden Kugelpfanne des Kugelgelenks zu gewährleisten.

Es versteht sich, dass sich der konische Abschnitt somit über einen wesentlichen Teil der Länge des Kugelzapfens erstreckt und von einer eher kurzen Fase zu unterscheiden ist, wie sie im Stand der Technik in einem anderen Zusammenhang bekannt ist. Die axiale Länge l₁ des konischen Abschnitts kann größer als 3 mm, vorzugsweise zwischen etwa 3 mm bis 7 mm oder mehr, sein. Der zylindrische Abschnitt besitzt einen Durchmesser d. Das Verhältnis von l₁/d beträgt mindestens 30 %, vorzugsweise zwischen etwa 40 % bis 50 %, und kann bis zu etwa 70 % oder sogar 80 % betragen. Ein runder Abschnitt kann axial zwischen dem konischen Abschnitt und dem zylindrischen Abschnitt angeordnet sein. Die Summe der axialen Längen l₂ des konischen Abschnitts und des runden Abschnitts kann größer als 3 mm, vorzugsweise zwischen etwa 3 mm bis 7 mm oder mehr, sein. Der zylindrische Abschnitt besitzt einen Durchmesser d. Das Verhältnis von l₂/d beträgt mindestens 30 %, vorzugsweise zwischen etwa 40 % bis 50 %, und kann bis zu etwa 70 % oder sogar 80 % betragen.

Bezüglich der Ausbildung des Zapfenstumpfs und der Kugel ist der Kugelzapfen im Unterschied zum nächstliegenden Stand der Technik zweiteilig ausgebildet, d. h. der Zapfenstumpf und die Kugel wurden separat hergestellt und erst nachträglich fest miteinander verbunden. Diese Verbindung kann beispielsweise durch Schweißen, Stecken, Schrauben, Vernieten oder andere geeignete Verbindungsverfahren realisiert werden. Dementsprechend bezieht sich die vorliegende Erfindung auch auf einen Zapfenstumpf, der zwar zur Ausbildung eines Kugelzapfens für die Verbindung mit einer Kugel ausgebildet und bestimmt ist, der jedoch separat von der Kugel hergestellt und erst nachträglich mit dieser verbunden wird. In dieser Weise wird die Möglichkeit geschaffen, identische oder unterschiedliche Zapfenstumpfe mit identischen oder unterschiedlichen Kugeln zur Erreichung einer Vielzahl von Permutationen von Kugelzapfen zu kombinieren.

Der Zapfenstumpf und die Kugel bestehen vorzugsweise aus Metall und dienen insbesondere in Kombination mit einer ebenfalls aus Metall oder auch aus Kunststoff bestehenden korrespondierenden Kugelpfanne zur Ausbildung eines Kugelgelenks. Derartige Kugelgelenke finden insbesondere im Bereich von Automobilen Anwendung, wie beispielsweise an Stabilisatorzapfen oder der Lenkung von Pkws. Es existieren jedoch viele weitere Anwendungsgebiete.

Im Stand der Technik sind für die Ausbildung der Befestigungsnut entweder spanabhebende Verfahren - insbesondere Drehen bzw. Einstechen - oder auch vergleichsweise komplexe radiale Umformungsverfahren bekannt. Der oberhalb gewürdigte nächstliegende Stand der Technik gemäß der DE 44 33 762 A1 enthält keinerlei Aussage dazu, wie die Befestigungsnut gefertigt wird. Gleiches gilt für die DE 10 2007 023 245 B4. Dem weiteren Stand der Technik gemäß EP 0 667 464, DE 10 2005 014 905 A1 und DE 20 2004 005 272 U1 fehlt es an dem erfindungsgemäßen konischen Abschnitt. Der sich an die Wulst anschließende zylindrische Abschnitt hat auch im Vergleich zum erfindungsgemäßen konischen Abschnitt den Nachteil, dass dieser eine geringere Biegefestigkeit besitzt. Der konische Abschnitt dient bei der Erfindung dazu, durch dessen Abmessungen und Kegelwinkel die gewünschte Winkelbeweglichkeit des Kugelzapfens in der Kugelpfanne des Kugelgelenks zu gewährleisten. An dieser Funktion fehlt es dem Kugelzapfen gemäß der EP 0 667 464 A2. Diese offenbart zwar ganz pauschal, dass der Zapfenstumpf durch Kaltumformung hergestellt ist, enthält jedoch keinerlei weitergehenden Aussagen, wie dies wirklich realisiert wird. Anhand der Ausbildung der Nut und der Wulst des bekannten Kugelzapfens erkennt der Fachmann jedoch, dass diese nur mittels eines vergleichweise komplexen und/oder teuren Verfahrens herstellbar sind. Durch Fließpressen ist eine solche Geometrie jedenfalls nicht herstellbar. Denkbar wäre ein geteiltes Werkzeug, wobei hier das Problem entsteht, dass im Bereich der Teilung des Werkzeugs ein unvermeidbarer Grad entsteht, der dann einen negativen Einfluss auf die gewünschte Dichtwirkung in der Nut besitzt. Wahrscheinlich ist die bekannte Herstellung der Nut durch Drehen bzw. Einstechen.

Die Erfindung wählt nun einen ganz anderen Weg zur Erreichung des Ziels einer kostengünstigen und flexiblen Herstellung eines Zapfenstumpfs für einen Kugelzapfen. Der Kugelzapfen ist zweiteilig ausgebildet und die Kugel wird erst in einem späteren Arbeitsschritt mit dem Zapfenstumpf verbunden. Der Zapfenstumpf selbst wird in einem mehrstufigen Verfahren - zum Beispiel in einer Mehrstufenpresse - hergestellt. Ein wesentlicher Verfahrensschritt besteht darin, dass die Wulst durch eine axiale Umformbewegung hergestellt und hierdurch die für die Befestigung eines Balgs oder dergleichen benötigte Befestigungsnut durch die Wulst begrenzt wird. Hierfür wird im Bereich des kugelseitigen Endes des Zapfenstumpfs genug Material zur Verfügung gestellt, welches dann zum Beispiel mittels eines einfachen ringförmigen Umformwerkzeugs in der Mehrstufenpresse durch eine einfache axiale Umformbewegung zur Ausbildung der Wulst elastisch-plastisch verformt wird. Dabei fährt das Umformwerkzeug in axialer Richtung in das Material des Zapfenstumpfs hinein und kontaktiert dieses sowohl mit seiner vorderen Stirnfläche als auch mit seiner inneren Mantelfläche. Hierdurch entsteht eine Art Stufe an dem Zapfenstumpf, wobei der radiale Teil der Stufe die Begrenzung der Wulst darstellt und der axiale Teil der Stufe ein neu entstandener zylindrischer Abschnitt ist. Das Umformwerkzeug könnte in diesem Bereich auch eine andere geometrische Ausbildung - insbesondere eine fasenartig konische Ausbildung - besitzen und daher der axiale Bereich der Stufe nicht streng axial ausgerichtet sein.

In einer Vorstufe wurde der Nutgrund bzw. der Bereich des Kopfs durch eine geeignete Umformoperation - zum Beispiel Aufstauchen, Reduzieren oder Fließpressen - hergestellt. Der Zapfenstumpf endet in dem zweiten Ende, an dem später - zum Beispiel durch Schweißen, Reibschweißen, Aufstecken oder Verstemmen - die Kugel befestigt wird.

Die neuartige Umformung erfordert keine Spezialwerkzeuge, wie sie im Stand der Technik benötigt werden. Durch das ringförmige Umformwerkzeug wird der Teil des Zapfenstumpfs umgeformt, dessen Durchmesser größer als der Innendurchmesser des ringförmigen Umformwerkzeugs ist. Dieser Teil wird in axialer Richtung auf das erste freie Ende mit dem Gewindeabschnitt hin verschoben. Aufgrund des vom ersten freien Ende des Zapfenstumpfs bereitgestellten Widerstands wird das Material von dem ringförmigen Umformwerkzeug gleichzeitig nach außen verformt und somit die ringförmige Wulst hergestellt. Dabei entsteht auch der zylindrische Abschnitt.

Die Geometrie der gewindeseitigen Flanke der Wulst hängt von der Festigkeit und dem Fließverhalten des verwendeten Materials des Zapfenstumpfs ab. Sie wird der Einfachheit halber vorzugsweise nicht durch ein Werkzeug geformt oder gehalten, um den Werkzeugsatz bewusst einfach halten zu können. Praktische Erprobungen wie auch umfangreiche FEM-Simulationen haben gezeigt, dass die mit diesem Verfahren hergestellten gewindeseitigen Flanken der Wulst insbesondere im Bereich des kleineren Durchmessers näherungsweise gerade hergestellt werden können. Dabei lassen sich bevorzugt Winkel gegenüber der Längsmittelachse des Zapfens von etwa 45° bis 60° herstellen. Kleinere Winkel sind ebenfalls möglich, verringern jedoch die Haltewirkung der entstandenen Wulst. Im Außenbereich der Wulst können Abweichungen von diesem Winkel durch Abweichung des Umformwerkzeugs leicht hergestellt werden. Dabei lässt sich der Winkel der gewindeseitigen Flanke gegenüber dem am kleineren Durchmesser hergestellten Winkel noch deutlich steiler ausführen. Die Gefahr der Gratbildung am Übergangsbereich zwischen der gewindeseitigen Flanke und dem größeren Außendurchmesser wird dadurch jedoch vergrößert. In der Praxis hat es sich als ausreichend herausgestellt, mit einem geraden Umformwerkzeug zu arbeiten und dadurch eine annähernd gerade Flanke herzustellen.

Der annähernd gerade Verlauf der Flanke erleichtert die Anpassung der Geometrie des Balgs an die Befestigungsnut bzw. die Wulst.

Es ist auch möglich, den Außendurchmesser der Wulst durch eine entsprechende Gestaltung des Umformwerkzeugs einzuengen, zum Beispiel um ein Maximalmaß nicht zu überschreiten, bestimmte Toleranzen des Außendurchmessers einzuhalten oder auch z. B. eine scharfe Kante an der Außenkontur durch geeignete Gestaltung des Umformwerkzeugs zu vermeiden. Vergleichbares gilt für die Erzeugung der kugelseitigen Begrenzungsfläche der Wulst. So lassen sich dort zum Beispiel sehr einfach ringförmige Nuten einprägen.

Für die gewindeseitige Ausführung des Zapfenstumpfs gibt es eine Vielzahl von Möglichkeiten. Hier können beispielsweise ein Gewinde mit oder ohne Innenschlüsselangriff, unterschiedliche Kegelformen - zum Beispiel für die Aufnahme in einem kegeligen Gegenstück - ein Gewinde mit Ansatzspitze mit oder ohne Außenschlüsselangriff, usw. realisiert werden. In der Mitte kann ein Bund angeordnet werden, der keine Schlüsselangriffsflächen, eine Sechskantschlüsselangriffsfläche, eine Mehrkantschlüsselangriffsfläche oder andere Schlüsselangriffsflächen aufweisen kann.

Der Gewindeabschnitt ist im Bereich des ersten freien Endes oder zumindest benachbart dazu angeordnet. Dies bedeutet, dass er zwar unmittelbar am freien Ende angeordnet sein kann, dies aber nicht muss. Z. B. kann dort ein Zentrieransatz vorgesehen sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein erstes Ausführungsbeispiel eines neuen Kugelzapfens.
- **Fig. 2a**: zeigt das erste Ausführungsbeispiel des neuen Kugelzapfens gemäß Fig. 1 in einem ersten Herstellungszustand.
- **Fig. 2b**: zeigt das erste Ausführungsbeispiel des neuen Kugelzapfens gemäß Fig. 1 während eines dem ersten Herstellungszustand gemäß Fig. 2a folgenden Herstellungsschritt.
- **Fig. 3**: zeigt eine Ansicht eines zweiten Ausführungsbeispiels des neuen Kugelzapfens mit einem an diesem montierten Balg.
- **Fig. 4**: zeigt ein drittes Ausführungsbeispiel des neuen Kugelzapfens.
- **Fig. 5**: zeigt ein viertes Ausführungsbeispiel des neuen Kugelzapfens.

### FIGURENBESCHREIBUNG

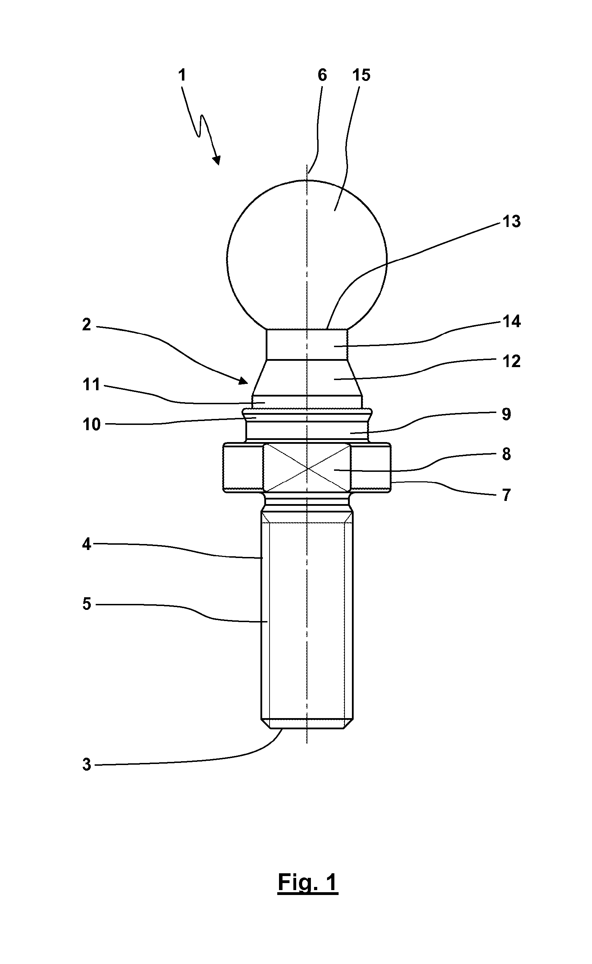

**Fig. 1** zeigt ein erstes Ausführungsbeispiel eines Kugelzapfens 1. Ein derartiger Kugelzapfen 1 dient in Kombination mit einer korrespondierenden Kugelpfanne in bekannter Weise zur Ausbildung eines Kugelgelenks (nicht dargestellt). Der Kugelzapfen 1 besteht insbesondere aus Metall und findet z. B. in der Lenkung eines Pkw Anwendung.

Der Kugelzapfen 1 weist einen Zapfenstumpf 2 mit einem ersten freien Ende 3 und einem sich in axialer Richtung an das erste freie Ende 3 anschließenden Gewindeabschnitt 4 mit einem Gewinde 5 auf. Bei dem Gewinde 5 kann es sich um ein metrisches Gewinde oder ein beliebiges anderes geeignetes Gewinde handeln. Im vorliegenden Ausführungsbeispiel schließt der Gewindeabschnitt 4 unmittelbar an das freie Ende 3 an. Andere Anordnungen sind jedoch ebenfalls möglich.

In derselben Richtung entlang der Längsmittelachse 6 des Kugelzapfens 1 schließt sich ein Betätigungsabschnitt 7 an. In diesem Ausführungsbeispiel ist der Betätigungsabschnitt 7 als Außenzweikant 32 ausgebildet und weist zwei um 180° versetzte gegenüberliegende Schlüsselflächen 8 für den Angriff eines Werkzeugschlüssels zur rotatorischen Betätigung des Kugelzapfens 1 auf. Es versteht sich, dass in der Darstellung der Fig. 1 lediglich eine der beiden Schlüsselflächen 8 sichtbar ist und andere Ausbildungen ebenso möglich sind.

Weiter im Anschluss ist eine Befestigungsnut 9 für die Befestigung eines Blags, einer Staubkappe oder dergleichen an den Zapfenstumpf 2 angeordnet. Die Befestigungsnut 9 ist weiter in derselben Richtung gesehen (d. h. abgewandt von dem Betätigungsabschnitt 7) durch eine Wulst 10 begrenzt. Im Anschluss an die Wulst 10 ist ein zylindrischer Abschnitt 11 angeordnet. Die Wulst 10 ist in axialer Richtung asymmetrisch ausgebildet und schließt mit ihrem dem zylindrischen Abschnitt 11 zugewandten axialen Bereich unter einem Winkel von etwa 90° an den zylindrischen Abschnitt 11 an, während der Winkel in Richtung der Befestigungsnut 9 deutlich größer in dem Sinne ist, dass der Übergang weniger abrupt und stufenartig ausfällt. Im Anschluss an den zylindrischen Abschnitt 11 ist ein konischer Abschnitt 12 angeordnet. Im Bereich des zweiten Endes 13 des Zapfenstumpfs 2 ist ein weiterer zylindrischer Abschnitt 14 angeordnet.

Im Bereich des zweiten Endes 13 des Zapfenstumpfs 2 ist eine Kugel 15 fest mit dem Zapfenstumpf 2 verbunden. Der Zapfenstumpf 2 und die Kugel 15 sind nicht einstückig, sondern werden separat gefertigt und anschließend durch ein geeignetes Verfahren - wie beispielsweise Schweißen, Reibschweißen, Stecken, Verstemmen, Schrauben oder Nieten - miteinander verbunden.

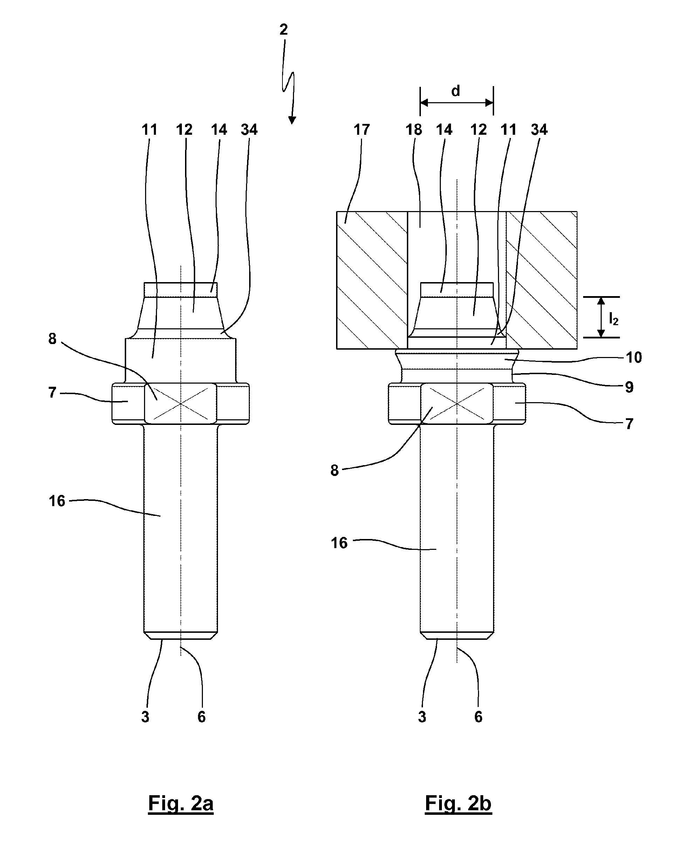

Die Wulst 10 wurde durch eine reine axiale Umformung hergestellt. Dies bedeutet, dass die Umformbewegung des Umformwerkzeugs rein axial ist. Dies bedeutet nicht, dass das Material des Zapfenstumpfs 2 während der Umformung nur in axialer Richtung verformt wird. Durch die Umformbewegung entstehen die Wulst 10 und zwischen dieser und dem konischen Abschnitt 12 der zylindrische Abschnitt 11, wie dies im Folgenden unter Bezugnahme auf die Darstellung der Fig. 2a und Fig. 2b weiter erläutert wird.

**Fig. 2a** und **Fig. 2b** zeigen einen Teil des Umformverfahrens zur Herstellung des Zapfenstumpfs 2 des Kugelzapfens 1 gemäß Fig. 1. Ein runder Abschnitt 34 ist zwischen dem konischen Abschnitt 12 und dem zylindrischen Abschnitt 11 angeordnet. Die Summe der axialen Längen l₂ des konischen Abschnitts 12 und des runden Abschnitts 34 ist größer als 3 mm, vorzugsweise zwischen etwa 3 mm bis 7 mm oder mehr. Der zylindrische Abschnitt 11 besitzt einen Durchmesser d. Das Verhältnis l₂/d beträgt mindestens 30 %, vorzugsweise zwischen etwa 40 % bis 50 %, und kann auch bis zu etwa 70 % oder sogar 80 % betragen.

**Fig. 2a** zeigt dabei den Zustand des Zapfenstumpfs 2 vor der Herstellung der Befestigungsnut 9 und der Wulst 10. Es ist ebenfalls erkennbar, dass der Zapfenstumpf 2 noch keinen Gewindeabschnitt 4, sondern stattdessen einen Schaftabschnitt 16 an dieser Stelle aufweist. Weiterhin ist erkennbar, dass der zylindrische Abschnitt 11 noch einen größeren Durchmesser als nach der Umformung besitzt. Die Kugel 15 ist noch nicht an dem Zapfenstumpf 2 befestigt.

**Fig. 2b** zeigt das eigentliche Umformverfahren zur Herstellung der Befestigungsnut 9 und der Wulst 10. Die Umformbewegung geschieht ausschließlich in einer axialen Richtung. Vorzugsweise wird eine Kaltumformung durchgeführt, insbesondere durch eine einfache Stauchoperation. Hierfür findet insbesondere ein ringförmiges Umformwerkzeug 17 Verwendung. Das Umformwerkzeug 17 weist eine mittig angeordnete zylindrische Bohrung 18 auf, die zur Aufnahme des verjüngten Endbereichs des Zapfenstumpfs 2 dient. Ausgehend von der Darstellung in Fig. 2a wird das Umformwerkzeug 17 - z. B. in einer Mehrstufenpresse - nach unten in axialer Richtung des ersten freien Endes 3 des Zapfenstumpfs 2 bewegt. Dabei greift das Umformwerkzeug 17 in die Bereiche des Materials des Zapfenstumpfs 2 ein, deren Außendurchmesser größer als der Innendurchmesser der Bohrung 18 des Umformwerkzeugs 17 ist. Aufgrund des Widerstands vom gewindeseitigen freien Ende 3 des Zapfenstumpfs 2 her findet so eine Verformung des Materials im Bereich des zylindrischen Abschnitts 11 (siehe Fig. 2a) so statt, dass die Wulst 10 aufgeworfen und die hierdurch begrenzte Befestigungsnut 9 geschaffen wird. Durch diese Verformung entsteht auch der sich an die Befestigungsnut 9 anschließende zylindrische Bereich 14. Dieser zylindrische Bereich 14 ist charakteristisch für die in dieser Weise durch reine axiale Umformung hergestellte Wulst 10.

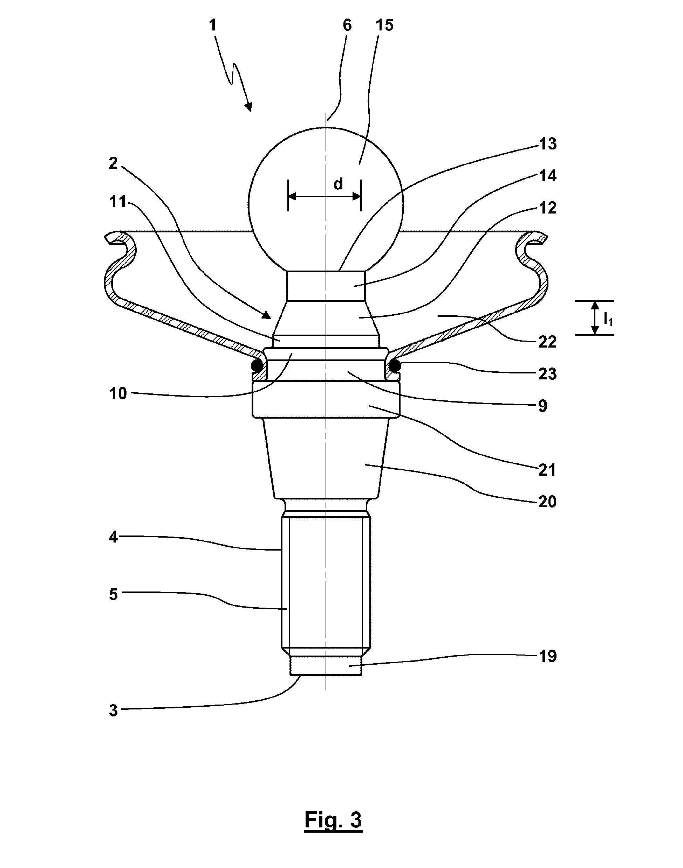

**Fig. 3** zeigt eine zweite Ausführungsform des Kugelzapfens 1 in einer beispielhaften Einbausituation. Bezüglich der mit den anderen Ausführungsformen übereinstimmenden Merkmale wird auf deren Beschreibung verwiesen. Im Unterschied zu dem in Fig. 1 dargestellten Kugelzapfen 1 weist dieser hier im Bereich des ersten freien Endes 3 einen Zentrieransatz 19 auf. Weiterhin sind anstelle des Betätigungsabschnitts 7 ein konischer Abschnitt 20 und ein weiterer zylindrischer Abschnitt 21 vorgesehen. Im Anschluss daran ist die Befestigungsnut 9 angeordnet.

Fig. 3 zeigte eine mögliche Einbausituation des Kugelzapfens 1 im Sinne der Verbindung mit einem Balg 22. Bei dem Balg 22 handelt es sich insbesondere um einen Dichtungsbalg oder eine Staubkappe, mit dem das durch den in eine Kugelpfanne (nicht dargestellt) eingreifenden Kugelzapfen 2 gebildete Kugelgelenk (nicht dargestellt) abgedichtet wird. Der Balg 22 besteht insbesondere aus einem elastisch verformbaren Kunststoff und stellt die gewünschte Dichtwirkung gegenüber der Befestigungsnut 9 sicher. Im vorliegenden Ausführungsbeispiel wird dies durch eine Feder 23 realisiert. Andere Befestigungsarten sind jedoch ebenfalls möglich.

Die axiale Länge l₁ des konischen Abschnitts 12 ist größer als 3 mm, vorzugsweise zwischen etwa 3 mm bis 7 mm oder mehr. Der zylindrische Abschnitt 11 besitzt einen Durchmesser d. Das Verhältnis von l₁/d beträgt mindestens 30 %, vorzugsweise zwischen etwa 40 % bis 50 %, und kann auch bis zu etwa 70 % oder sogar 80 % betragen.

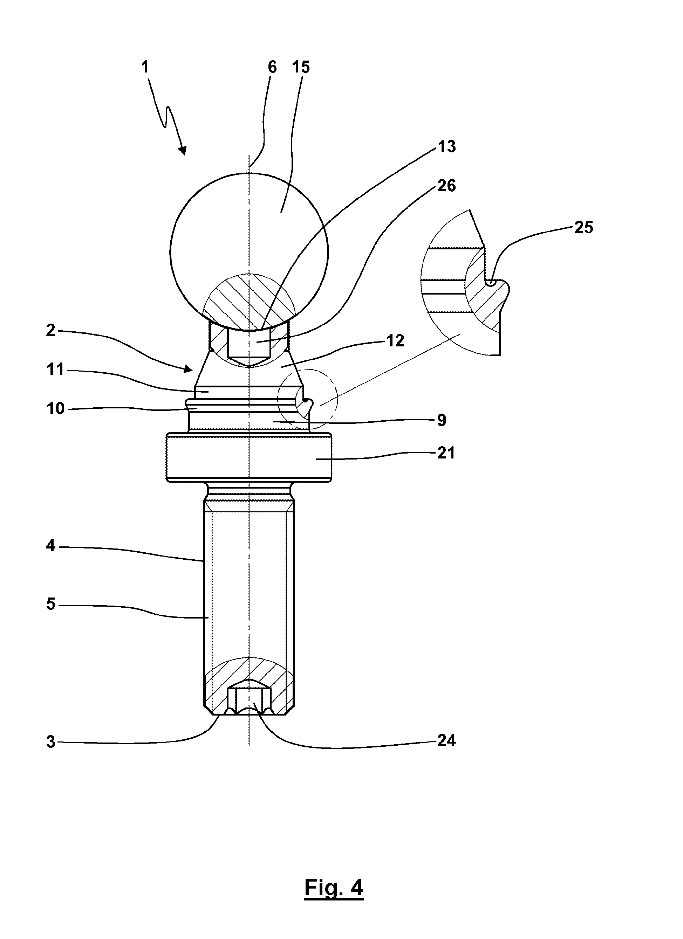

**Fig. 4** zeigt eine dritte Ausführungsform des Kugelzapfens 1. Bezüglich der mit den anderen Ausführungsformen übereinstimmenden Merkmale wird auf deren Beschreibung verwiesen. Im Unterschied zu den bisher beschriebenen beispielhaften Ausführungsformen weist der Kugelzapfen 1 gemäß Fig. 4 einen Betätigungsabschnitt 7 auf, der als Innensechskant 24 ausgebildet und im Bereich des ersten freien Endes 3 des Zapfenstumpfs 2 angeordnet ist. Wie die Vergrößerungsdarstellung in Fig. 4 erkennen lässt, ist im Bereich der Wulst 10 eine Hinterschneidung 25 vorgesehen. Weiterhin weist der obere Bereich des Zapfenstumpfs 2 eine Einnapfung 26 auf, die der Gewichtsreduzierung des Kugelzapfens 1 dient.

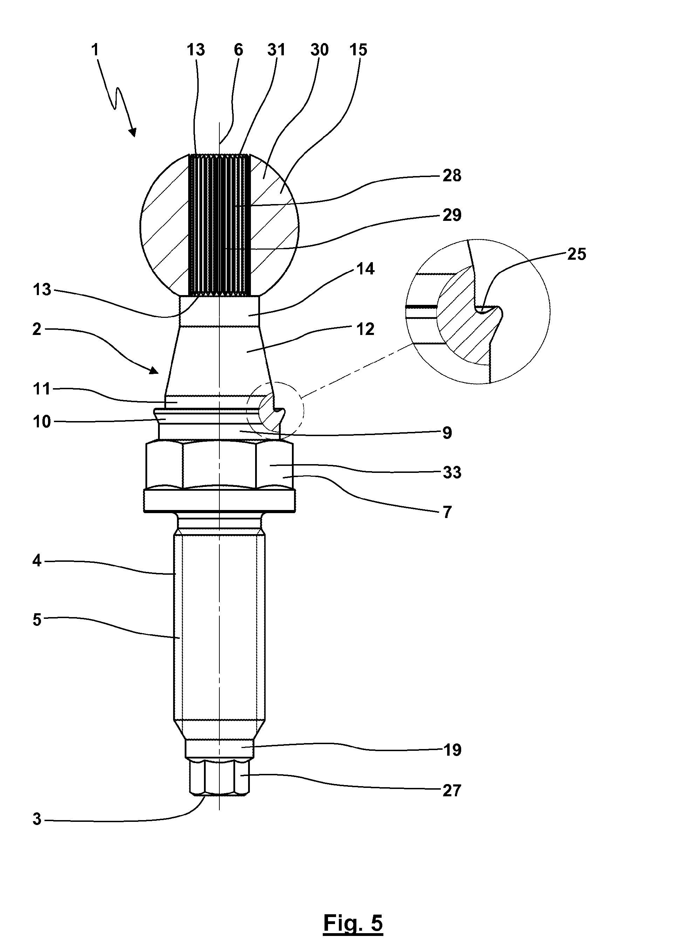

**Fig. 5** zeigt eine weitere beispielhafte Ausführungsform des Kugelzapfens 1. Bezüglich der mit den anderen Ausführungsformen übereinstimmenden Merkmale wird auf deren Beschreibung verwiesen. In diesem Fall ist als Betätigungsabschnitt 7 etwa mittig ein erster Außensechskant 27 und im Bereich des ersten freien Endes 3 ein zweiter Außensechskant 33 vorgesehen. Im Bereich des gegenüberliegenden axialen Endes 13 ist ein Kugelbefestigungsabschnitt 28 angeordnet, der im vorliegenden Ausführungsbeispiel ein Rändel 29 aufweist. Die Kugel 15 ist also als Hohlkugel 30 ausgebildet, in deren Öffnung 31 bzw. das diese umgebende Material der Hohlkugel 30 das Rändel 29 im Sinne einer Presspassung eingreift und somit eine feste Verbindung der Hohlkugel 30 mit dem Zapfenstumpf 2 gewährleistet ist. In diesem Fall ist das zweite Ende 13 des Zapfenstumpfs 2 so zu verstehen, dass es durch den gesamten Bereich des Rändels 29 gebildet wird, mit dem die als Hohlkugel 30 ausgebildete Kugel 15 verbunden ist.

### BEZUGSZEICHENLISTE

- 1: Kugelzapfen
- 2: Zapfenstumpf
- 3: erstes freies Ende
- 4: Gewindeabschnitt
- 5: Gewinde
- 6: Längsmittelachse
- 7: Betätigungsabschnitt
- 8: Schlüsselfläche
- 9: Befestigungsnut
- 10: Wulst
- 11: zylindrischer Abschnitt
- 12: konischer Abschnitt
- 13: zweites Ende
- 14: zylindrischer Abschnitt
- 15: Kugel
- 16: Schaftabschnitt
- 17: Umformwerkzeug
- 18: Bohrung
- 19: Zentrieransatz
- 20: konischer Abschnitt
- 21: zylindrischer Abschnitt
- 22: Balg
- 23: Feder
- 24: Innensechskant
- 25: Hinterschneidung
- 26: Einnapfung
- 27: Außensechskant
- 28: Kugelbefestigungsabschnitt
- 29: Rändel
- 30: Hohlkugel
- 31: Öffnung
- 32: Außenzweikant
- 33: Außensechskant
- 34: runder Abschnitt

## Patentansprüche

1. Zapfenstumpf (2), mit
einem ersten freien Ende (3), einem Gewindeabschnitt (4), einer Befestigungsnut (9) für die Befestigung eines Balgs (22) oder dergleichen an dem Zapfenstumpf (2), einem konischen Abschnitt (12) und einem zweiten Ende (13),
wobei der Gewindeabschnitt (4) im Bereich des ersten freien Endes (3) oder zumindest benachbart dazu angeordnet ist,
wobei die Befestigungsnut (9) in axialer Richtung zwischen dem Gewindeabschnitt (4) und dem konischen Abschnitt (12) angeordnet ist und an ihrem dem konischen Abschnitt (12) zugewandten axialen Ende durch eine Wulst (10) begrenzt ist, wobei der konische Abschnitt (12) in axialer Richtung zwischen der Wulst (10) und dem zweiten Ende (13) angeordnet ist, **dadurch gekennzeichnet, dass**
die Wulst (10) durch eine axiale Umformung hergestellt und in axialer Richtung zwischen der Wulst (10) und dem konischen Abschnitt (12) ein zylindrischer Abschnitt (11) angeordnet ist.

2. Zapfenstumpf (2) nach Anspruch 1, **dadurch gekennzeichnet, dass** die Wulst (10) in axialer Richtung asymmetrisch ausgebildet ist.

3. Zapfenstumpf (2) nach Anspruch 2, **dadurch gekennzeichnet, dass** die Wulst (10) mit ihrem dem konischen Abschnitt (12) zugewandten axialen Bereich unter einem Winkel von etwa 90° an den zylindrischen Abschnitt (11) anschließt.

4. Zapfenstumpf (2) nach mindestens einem der Ansprüche 1 bis 3, **dadurch gekennzeichnet, dass** die gewindeseitige Flanke der Wulst (10) im Bereich ihres kleineren Durchmessers näherungsweise gerade ausgeführt ist und gegenüber der Längsmittelachse (6) einen Winkel von zwischen etwa 30° bis 60°, vorzugsweise zwischen etwa 45° bis 60°, aufweist.

5. Zapfenstumpf (2) nach mindestens einem der Ansprüche 1 bis 4, **dadurch gekennzeichnet, dass** die Wulst (10) durch Kaltumformung hergestellt ist.

6. Zapfenstumpf (2) nach mindestens einem der Ansprüche 1 bis 5, **dadurch gekennzeichnet, dass** die Wulst (10) durch Stauchen hergestellt ist.

7. Zapfenstumpf (2) nach mindestens einem der Ansprüche 1 bis 6, **dadurch gekennzeichnet, dass** das zweite Ende (13) für eine Verbindung mit einer Kugel (15) zur Schaffung eines Kugelzapfens (1) ausgebildet und bestimmt ist.

8. Kugelzapfen (1) mit einem Zapfenstumpf (2) nach Anspruch 1, **dadurch gekennzeichnet, dass** der Zapfenstumpf (2) und die Kugel (15) separat hergestellt und erst nach der Umformung miteinander verbunden wurden und in dieser Hinsicht der Kugelzapfen (1) zweiteilig ausgebildet ist.

9. Kugelzapfen (1) nach Anspruch 8, **dadurch gekennzeichnet, dass** die Wulst (10) in axialer Richtung asymmetrisch ausgebildet ist.

10. Kugelzapfen (1) nach Anspruch 9, **dadurch gekennzeichnet, dass** die Wulst (10) mit ihrem dem konischen Abschnitt (12) zugewandten axialen Bereich unter einem Winkel von etwa 90° an den zylindrischen Abschnitt (11) anschließt.

11. Kugelzapfen (1) nach mindestens einem der Ansprüche 8 bis 10, **dadurch gekennzeichnet, dass** die gewindeseitige Flanke der Wulst (10) im Bereich ihres kleineren Durchmessers näherungsweise gerade ausgeführt ist und gegenüber der Längsmittelachse (6) einen Winkel von zwischen etwa 30° bis 60°, vorzugsweise zwischen etwa 45° bis 60°, aufweist.

12. Kugelzapfen (1) nach mindestens einem der Ansprüche 8 bis 11, **dadurch gekennzeichnet, dass** die Wulst (10) durch Kaltumformung hergestellt ist.

13. Kugelzapfen (1) nach mindestens einem der Ansprüche 8 bis 12, **dadurch gekennzeichnet, dass** die Wulst (10) durch Stauchen hergestellt ist.

14. Verfahren zur Herstellung eines Zapfenstumpfs (2), insbesondere eines Zapfenstumpfs (2) nach mindestens einem der Ansprüche 1 bis 6, mit dem Schritt
Kaltumformung des Zapfenstumpfs (2) derart, dass dieser ein erstes freies Ende (3), einen Gewindeabschnitt (4), eine Befestigungsnut (9) für die Befestigung eines Balgs (22) oder dergleichen an dem Zapfenstumpf (2), einen konischen Abschnitt (12) und ein zweites Ende (13) aufweist,
wobei der Gewindeabschnitt (4) im Bereich des ersten freien Endes (3) oder zumindest benachbart dazu angeordnet ist,
wobei die Befestigungsnut (9) in axialer Richtung zwischen dem Gewindeabschnitt (4) und dem konischen Abschnitt (12) angeordnet ist und an ihrem dem konischen Abschnitt (12) zugewandten axialen Ende durch eine Wulst (10) begrenzt ist, wobei der konische Abschnitt (12) in axialer Richtung zwischen der Wulst (10) und dem zweiten Ende (13) angeordnet ist, und
wobei die Wulst (10) durch eine axiale Kaltumformung so hergestellt wird, dass in axialer Richtung zwischen der Wulst (10) und dem konischen Abschnitt (12) ein zylindrischer Abschnitt (11) entsteht.

15. Verfahren zur Herstellung eines Kugelzapfens (1), insbesondere eines Kugelzapfens (1) nach mindestens einem der Ansprüche 8 bis 13, mit den Schritten
Herstellen eines Zapfenstumpfs (2) mit den Schritten gemäß Anspruch 14; und Verbinden des zweiten Endes (13) des Zapfenstumpfs (2) mit einer Kugel (15).

## Claims

1. A stud stub (2), comprising
a first free end (3), a threaded portion (4), an attachment channel (9) for attachment of a bellow (22) and the like to the stud stub (2), a conical portion (12) and a second end (13),
the threaded portion (4) being arranged in the region of the first free end (3) or at least adjacent thereto,
the attachment channel (9) being arranged between the threaded portion (4) and the conical portion (12) in an axial direction and at its axial end facing the conical portion (12) being limited by a bead (10),
the conical portion (12) being arranged between the bead (10) and the second end (13) in an axial direction, **characterized in that**
the bead (10) has been produced by axial forming and a cylindrical portion (11) is arranged between the bead (10) and the conical portion (12) in an axial direction.

2. The stud stub (2) of claim 1, **characterized in that** the bead (10) is designed to be asymmetric in an axial direction.

3. The stud stub (2) of claim 2, **characterized in that** the bead (10) has an axial region facing the conical portion (12), the axial region being located next to the cylindrical portion (11) at an angle of approximately 90°.

4. The stud stub (2) of at least one of claims 1 to 3, **characterized in that** the flank of the bead (10) facing the threaded portion (4) in the region of its smaller diameter is designed to be approximately straight and to have an angle with respect to the longitudinal center axis (6) of between approximately 30° to 60°, preferably between approximately 45° to 60°.

5. The stud stub (2) of at least one of claims 1 to 4, **characterized in that** the bead (10) has been produced by cold forming.

6. The stud stub (2) of at least one of claims 1 to 5, **characterized in that** the bead (10) has been produced by upsetting.

7. The stud stub (2) of at least one of claims 1 to 6, **characterized in that** the second end (13) is designed and destined for a connection with a ball (15) for attaining a ball stud fastener (1).

8. A ball stud fastener (1) including a stud stub (2) of claim 1, **characterized in that** the stud stub (2) and the ball (15) have been separately produced and they have been interconnected after forming and the ball stud fastener (1) is designed to include two pieces in this sense.

9. A ball stud fastener (1) of claim 8, **characterized in that** the bead (10) is designed to be asymmetric in an axial direction.

10. A ball stud fastener (1) of claim 9, **characterized in that** the bead (10) has an axial region facing the conical portion (12), the axial region being located next to the cylindrical portion (11) at an angle of approximately 90°.

11. A ball stud fastener (1) of at least one of claims 8 to 10, **characterized in that** the flank of the bead (10) facing the threaded portion (4) in the region of its smaller diameter is designed to be approximately straight and to have an angle with respect to the longitudinal center axis (6) of between approximately 30° to 60°, preferably between approximately 45° to 60°.

12. A ball stud fastener (1) of at least one of claims 8 to 11, **characterized in that** the bead (10) has been produced by cold forming.

13. A ball stud fastener (1) of at least one of claims 8 to 12, **characterized in that** the bead (10) has been produced by upsetting.

14. A method for producing a stud stub (2), especially a stud stub (2) of at least one of claims 1 to 6, comprising the step of
cold forming of the stud stub (2) such that it includes a first free end (3), a threaded portion (4), an attachment channel (9) for attachment of a bellow (22) and the like to the stud stub (2), a conical portion (12) and a second end (13),
the threaded portion (4) being arranged in the region of the first free end (3) or at least adjacent thereto,
the attachment channel (9) being arranged between the threaded portion (4) and the conical portion (12) in an axial direction and at its axial end facing the conical portion (12) being limited by a bead (10),
the conical portion (12) being arranged between the bead (10) and the second end (13) in an axial direction, and
the bead (10) being produced by cold forming in an axial direction such that a cylindrical portion (11) results between the bead (10) and the conical portion (12) in an axial direction.

15. A method for producing a ball stud fastener (1), especially a ball stud fastener (1) of at least one of claims 8 to 13, comprising the steps of
producing a stud stub (2) with the steps according to claim 14; and
connecting the second end (13) of the stud stub (2) to a ball (15).

## Revendications

1. Tronçon de pivot (2), ayant
une première extrémité libre (3), une section filetée (4), une rainure de fixation (9) pour la fixation d'un soufflet (22) ou similaire sur le tronçon de pivot (2), une section conique (12) et une deuxième extrémité (13),
la section filetée (4) étant agencée dans la région de la première extrémité libre (3) ou à tout le moins en position adjacente à celle-ci,
la rainure de fixation (9) étant agencée dans le sens axial entre la section filetée (4) et la section conique (12) et étant délimitée par un bourrelet (10) à son extrémité axiale dirigée vers la section conique (12),
la section conique (12) étant agencée dans le sens axial entre le bourrelet (10) et la deuxième extrémité (13), **caractérisé en ce que**
le bourrelet (10) est produit par une formage axial et une section cylindrique (11) est agencée dans le sens axial entre le bourrelet (10) et la section conique (12).

2. Tronçon de pivot (2) selon la revendication 1, **caractérisé en ce que** le bourrelet (10) est réalisé de façon asymétrique dans le sens axial.

3. Tronçon de pivot (2) selon la revendication 2, **caractérisé en ce que** le bourrelet (10) est rattaché à la section cylindrique (11) avec sa région axiale dirigée vers la section conique (12) dans un angle d'environ 90°.

4. Tronçon de pivot (2) selon au moins l'une des revendications 1 à 3, **caractérisé en ce que** le flanc du bourrelet (10) du côté du filetage est réalisé de façon sensiblement droite dans la région de son plus petit diamètre et présente un angle compris entre environ 30° et 60°, et de préférence entre environ 45° et 60°, par rapport à l'axe médian longitudinal (6).

5. Tronçon de pivot (2) selon au moins l'une des revendications 1 à 4, **caractérisé en ce que** le bourrelet (10) est produit par un formage à froid.

6. Tronçon de pivot (2) selon au moins l'une des revendications 1 à 5, **caractérisé en ce que** le bourrelet (10) est produit par un refoulage.

7. Tronçon de pivot (2) selon au moins l'une des revendications 1 à 6, **caractérisé en ce que** la deuxième extrémité (13) est conçue pour et destinée à un assemblage avec une rotule (15) en vue de la réalisation d'un pivot à rotule (1).

8. Pivot à rotule (1) ayant un tronçon de pivot (2) selon la revendication 1, **caractérisé en ce que** le tronçon de pivot (2) et la rotule (15) sont fabriqués séparément et ne sont assemblés l'un avec l'autre qu'après le formage et, dans ce sens, le pivot à rotule (1) est réalisé en deux parties.

9. Pivot à rotule (1) selon la revendication 8, **caractérisé en ce que** le bourrelet (10) est réalisé de façon asymétrique dans le sens axial.

10. Pivot à rotule (1) selon la revendication 9, **caractérisé en ce que** le bourrelet (10) est rattaché à la section cylindrique (11) avec sa région axiale dirigée vers la section conique (12) dans un angle d'environ 90°.

11. Pivot à rotule (1) selon au moins l'une des revendications 8 à 10, **caractérisé en ce que** le flanc du bourrelet (10) du côté du filetage est réalisé de façon sensiblement droite dans la région de son plus petit diamètre et présente un angle compris entre environ 30° et 60°, et de préférence entre environ 45° et 60°, par rapport à l'axe médian longitudinal (6).

12. Pivot à rotule (1) selon au moins l'une des revendications 8 à 11, **caractérisé en ce que** le bourrelet (10) est produit par un formage à froid.

13. Pivot à rotule (1) selon au moins l'une des revendications 8 à 12, **caractérisé en ce que** le bourrelet (10) est produit par un refoulage.

14. Procédé de réalisation d'un tronçon de pivot (2), en particulier d'un tronçon de pivot (2) selon au moins l'une des revendications 1 à 6, comprenant l'étape :
formage à froid du tronçon de pivot (2) de telle sorte que celui-ci présente une première extrémité libre (3), une section filetée (4), une rainure de fixation (9) pour la fixation d'un soufflet (22) ou similaire sur le tronçon de pivot (2), une section conique (12) et une deuxième extrémité (13),
la section filetée (4) étant agencée dans la région de la première extrémité libre (3) ou à tout le moins en position adjacente à celle-ci,
la rainure de fixation (9) étant agencée dans le sens axial entre la section filetée (4) et la section conique (12) et étant délimitée par un bourrelet (10) à son extrémité axiale dirigée vers la section conique (12),
la section conique (12) étant agencée dans le sens axial entre le bourrelet (10) et la deuxième extrémité (13), et
le bourrelet (10) étant produit par une formage axial à froid de telle sorte qu'une section cylindrique (11) est créée dans le sens axial entre le bourrelet (10) et la section conique (12).

15. Procédé de réalisation d'un pivot à rotule (1), en particulier d'un pivot à rotule (1) selon au moins l'une des revendications 8 à 13, comprenant les étapes :
fabrication d'un tronçon de pivot (2) avec les étapes selon la revendication 14 ; et
assemblage de la deuxième extrémité (13) du tronçon de pivot (2) avec une rotule (15).
